# DEMANDE DE BREVET EUROPEEN

(11) **EP 0 692 399 A1**
(43) Date de publication de la demande: **17.01.1996**
(21) Numéro de dépôt: 95401559.0
(22) Date de dépôt: 29.06.1995
(51) Int. Cl.: B60J 5/04

(54) **Panneau anti-intrusion de portière de véhicule automobile**

(30) Priorité: 12.07.1994 FR 9408790
(71) Demandeur: SOLLAC, F-92800 Puteaux (FR)
(72) Inventeur: de Smet, Gabriel, F-95880 Enghein-Les-Bains (FR); Bonte, Gérard, F-78340 Louveciennes (FR)
(74) Mandataire: Ventavoli, Roger

(57) **Abrégé**

La présente invention a pour objet un panneau anti-intrusion de portière de véhicule automobile constituée d'au moins une partie inférieure pleine formée d'un panneau extérieur et d'un panneau de revêtement intérieur et destinée à coopérer avec un encadrement de portière.

Le panneau anti-intrusion est constitué d'une plaque en acier (1) aux dimensions de la partie inférieure pleine de la portière, présentant le long de ses extrémités latérales (2, 3) et de son extrémité inférieure (4) un jonc périphérique (5) faisant saillie, destiné à coopérer avec l'encadrement de la portière, et une traverse rigide (8) faisant saillie de même que le jonc périphérique, le long du bord supérieur (7) de ladite plaque.

La présente invention concerne également une portière de véhicule automobile comportant au moins une partie inférieure pleine, constituée d'un panneau extérieur et d'un panneau intérieur, dans laquelle le panneau intérieur est un panneau anti-intrusion tel que décrit ci-dessus sur lequel est fixé un revêtement moulé formant l'intérieur de ladite portière.

## Description

La présente invention a pour objet un panneau anti-intrusion de portière d'un véhicule automobile constituée d'au moins une partie inférieure pleine, et une portière munie d'un tel panneau anti-intrusion.

De manière habituelle, les portières de véhicule automobile sont constituées d'un panneau extérieur, généralement réalisé en acier embouti afin de lui conférer la forme désirée, et un panneau intérieur, généralement en un matériau synthétique moulé, délimitant entre eux un logement pour une vitre mobile.

Chaque portière est liée à deux montants latéraux de la caisse du véhicule formant cadre de portière par au moins deux charnières sur le premier et par une serrure sur le second.

La portière habituellement vient en contact d'affleurement plan contre le cadre de portière, sans aucune insertion mécanique entre la portière et son cadre.

Le problème non résolu sur ce type de portière, réside dans le fait que leur intrusion dans l'habitacle du véhicule n'est pas empêchée à la suite de contraintes de flexion consécutives à des enfoncements de la portière, par exemple lors de collisions latérales.

En effet, dans le cas d'une collision latérale, le véhicule percuté subit l'effort dû au choc généralement au niveau des portières, dans une zone habituellement à faible résistance mécanique en compression dans la direction du choc.

Ceci provoque généralement de grandes déformations du panneau extérieur de la portière et une réduction importante du volume de l'habitacle.

Il est connu pour absorber plus d'énergie due au choc au niveau des portières de renforcer lesdites portières et de limiter l'enfoncement de celles-ci avec des barres anti-intrusion. Dans ce cas, I'énergie due au choc est répartie linéairement sur les barres de renfort et est ainsi transmise dans les deux montants latéraux de la portière aux points d'appui desdites barres sur lesdits montants.

Dans ce cas, I'énergie due au choc est transformée en effort de flexion sur les barres de renfort, qui après déformation de ces barres entraîne également une déformation par flexion des montants.

Or une telle déformation des montants de portière est très préjudiciable aux occupants, ceux-ci étant généralement assis au droit de ces montants.

Il est également connu de réaliser des portières dans lesquelles la liaison de la portière avec le cadre, lorsque celle-ci est fermée, s'effectue avec une insertion mécanique entre ladite portière et ledit cadre, la portière étant en quelque sorte encastrée sur son cadre.

Ce type d'aménagement consiste habituellement en deux moyens ou éléments coopérants en s'engageant l'un dans l'autre lorsque la portière est en position fermée, l'un sur la portière, l'autre sur son cadre, I'élément ménagé sur la portière étant généralement une saillie périphérique, et l'élément ménagé sur le cadre une gorge périphérique de forme sensiblement conjuguée à celle de la saillie.

Ce type de configuration permet de limiter la pénétration de la portière dans l'habitacle du véhicule en cas de choc latéral de moyenne violence, mais pas en cas de choc violent.

L'invention se propose de fournir un panneau anti-intrusion de portière de véhicule automobile permettant d'absorber une grande quantité d'énergie lors d'un choc, sans entraîner de déformation importante de l'habitacle et sans induire sur les occupants une accélération due au choc préjudiciable à leur vie, c'est-à-dire inférieure à environ 50 g.

La présente invention a plus particulièrement pour objet un panneau anti-intrusion de portière de véhicule automobile constituée d'au moins une partie inférieure pleine formée d'un panneau extérieur et d'un panneau de revêtement intérieur et destinée à coopérer avec un encadrement de portière , caractérisé en ce qu'il est constitué d'une plaque en acier aux dimensions de la partie inférieure pleine de la portière, présentant le long de ses extrémités latérales et de son extrémité inférieure un jonc périphérique faisant saillie, destiné à coopérer avec l'encadrement de la portière, et une traverse rigide faisant saillie le long du bord supérieur de ladite plaque.

Selon d'autres caractéristiques de l'invention :
- le jonc périphérique a une forme géométrique non développable en cas de sollicitation mécanique en déformation ;
- le jonc périphérique a la forme générale d'un triangle, la base étant solidaire de la plaque en acier ;
- le jonc périphérique a la forme générale d'un trapèze, la grande base étant solidaire de la plaque en acier ;
- le jonc périphérique et la plaque en acier sont monobloc ;
- la plaque en acier est plane ;
- la plaque en acier est légèrement convexe, le bombé étant dirigé du côté du jonc et de la traverse ;
- la traverse est soudée sur la plaque en acier ;
- la traverse est vissée sur la plaque en acier ;
- le panneau anti-intrusion est muni sur toute sa périphérie d'orifices destinés à le fixer dans la portière, entre le panneau de revêtement intérieur et le panneau extérieur ;
- les orifices sont débouchants à l'intérieur de la cavité ménagée par le jonc périphérique ;
- le panneau anti-intrusion est en acier possédant un allongement minimal égal à 30 %.

La présente invention concerne également une portière de véhicule automobile comportant au moins une partie inférieure pleine, constituée d'un panneau extérieur et d'un panneau intérieur, caractérisée en ce que le panneau intérieur est un panneau anti-intrusion selon l'une quelconque des caractéristiques précédentes sur lequel est fixé un revêtement moulé formant l'intérieur de ladite portière.

La portière est en liaison encastrée, aux jeux de fonctionnement près, avec son encadrement lorsqu'elle est en position fermée, le jonc périphérique coopérant avec une saillie ménagée dans ledit encadrement.

Les caractéristiques et avantages apparaîtront mieux au cours de la description qui va suivre, donnée uniquement à titre d'exemple et faite en référence aux dessins annexés dans lesquels :
- la Fig. 1 est une vue schématique, en perspective coupée rabattue d'un exemple de réalisation d'un panneau anti-intrusion selon l'invention ;
- la Fig. 2 est une vue en coupe transversale d'un exemple de réalisation d'une portière comportant un panneau anti-intrusion selon l'invention, la portière étant fermée;
- la Fig. 3 est une vue en coupe transversale d'un autre exemple de réalisation d'une portière comportant un panneau anti-intrusion selon l'invention, la portière étant fermée;
- la Fig. 4 est une vue en coupe de la Fig. 3 selon la ligne 3-3.

Le panneau anti-intrusion de portière de véhicule automobile selon l'invention est constitué d'une plaque en acier 1 ayant sensiblement les dimensions de la partie inférieure pleine de la portière.

La plaque en acier 1 présente le long de ses extrémités latérales 2, 3 et de son extrémité inférieure 4, un jonc périphérique 5, faisant saillie, et destiné à coopérer avec l'encadrement 6 de la portière, lorsque celle-ci est en position fermée.

La plaque en acier 1 est également munie le long de son bord supérieur 7 d'une traverse rigide 8.

Dans l'exemple de réalisation représenté sur les figures, la traverse rigide 8 fait saillie du même coté que le jonc périphérique 5. Cette traverse rigide 8 peut également faire saillie du côté opposé à celui muni du jonc périphérique 5, ou même être scindée en deux et ainsi faire saillie des deux côtés.

La traverse rigide 8 est soudée, rivetée ou vissée sur la plaque en acier 1.

De manière préférentielle, la plaque en acier 1 et le jonc périphérique 5 sont monobloc, par exemple le jonc périphérique 5 est obtenu par pliage des extrémités de ladite plaque 1.

Il est bien évident que le jonc périphérique peut être rapporté sur la plaque en acier 1, par exemple par soudage.

Le jonc périphérique 5 a une forme géométrique non développable en cas de sollicitation mécanique en déformation.

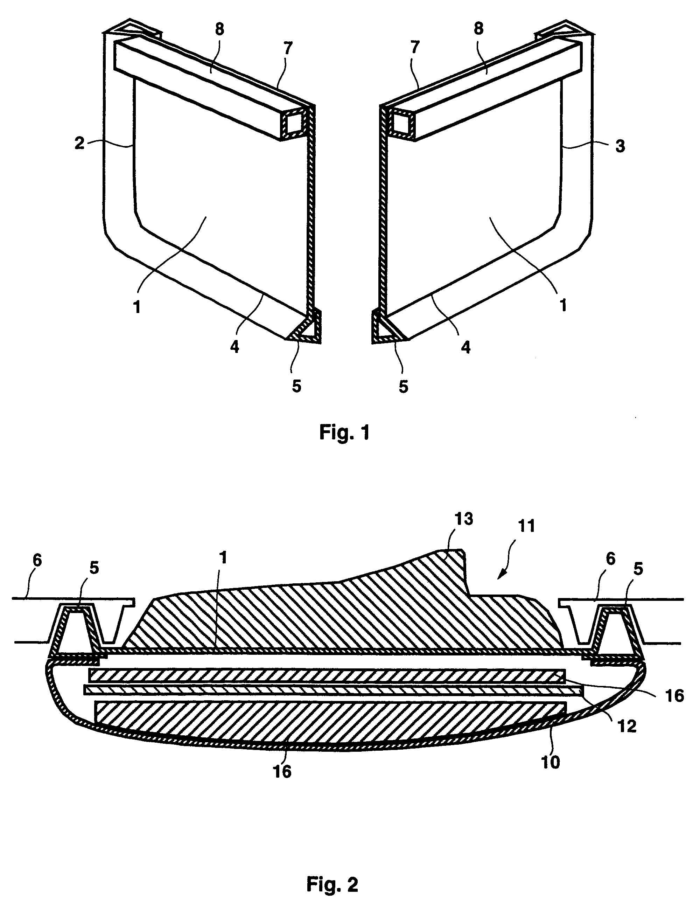

Dans l'exemple de réalisation représenté à la Fig. 1, le jonc périphérique 5 a la forme générale d'un triangle, la base étant solidaire de la plaque en acier 1, et la traverse rigide 8 est parallépipédique.

Dans l'exemple de réalisation d'une portière représenté à la Fig. 2, le jonc périphérique 5 a la forme générale d'un trapèze, la grande base étant solidaire de la plaque en acier 1.

La hauteur du jonc 5 est telle qu'elle soit suffisamment importante pour permettre un encastrement de la portière dans son encadrement et suffisamment faible pour éviter une déformation par flambage trop rapide en cas de sollicitation en compression.

Pour assurer que le panneau anti-intrusion permette d'absorber une grande quantité d'énergie lors d'un choc, sans entraîner de déformation importante de l'habitacle, le panneau en acier doit être plan ou légèrement convexe, le bombé étant dirigé du côté du jonc 5.

Il est également important que le panneau anti-intrusion, ou au moins la plaque en acier 1 se déforme de manière importante lors d'un choc, ce qui impose l'utilisation d'un matériau à grande capacité d'allongement, au moins égal à 30 %, et à contrainte élevée afin de garantir une déformation permanente dudit panneau. Il est également intéressant que ce panneau ne soit pas trop lourd, ce qui impose l'utilisation d'un acier à limite élastique relativement élevée, par exemple de l'ordre de 250 à 400 MPa afin de pouvoir utiliser un panneau d'épaisseur faible.

Les aciers du type IF ou IFHR qui permettent d'entrer dans le domaine plastique des déformations pour un allongement de moins de 1 %, par exemple un acier IFHR 340 (A% = 40% et Re = 340 MPa), sont particulièrement adaptés.

La portière de véhicule automobile muni d'un tel panneau anti-intrusion, telle que représentée aux Fig. 2 à 4 comprend au moins une partie inférieure pleine 9 et est constituée d'un panneau extérieur 10 et d'un panneau intérieur 11, délimitant entre eux un logement pour une vitre amovible 12.

Le panneau intérieur 11 est un panneau anti-intrusion tel que décrit ci-dessus sur lequel est fixé un revêtement moulé 13 formant l'intérieur visible de la portière, muni entre autres par exemple d'un accoudoir 14. Le revêtement moulé est fixé sur le panneau anti-intrusion selon l'invention par tout moyen connu tel que vissage, clipsage, etc.

Comme on le voit Fig. 2, le panneau anti-intrusion peut être fixé au panneau extérieur 10 de la portière par soudage.

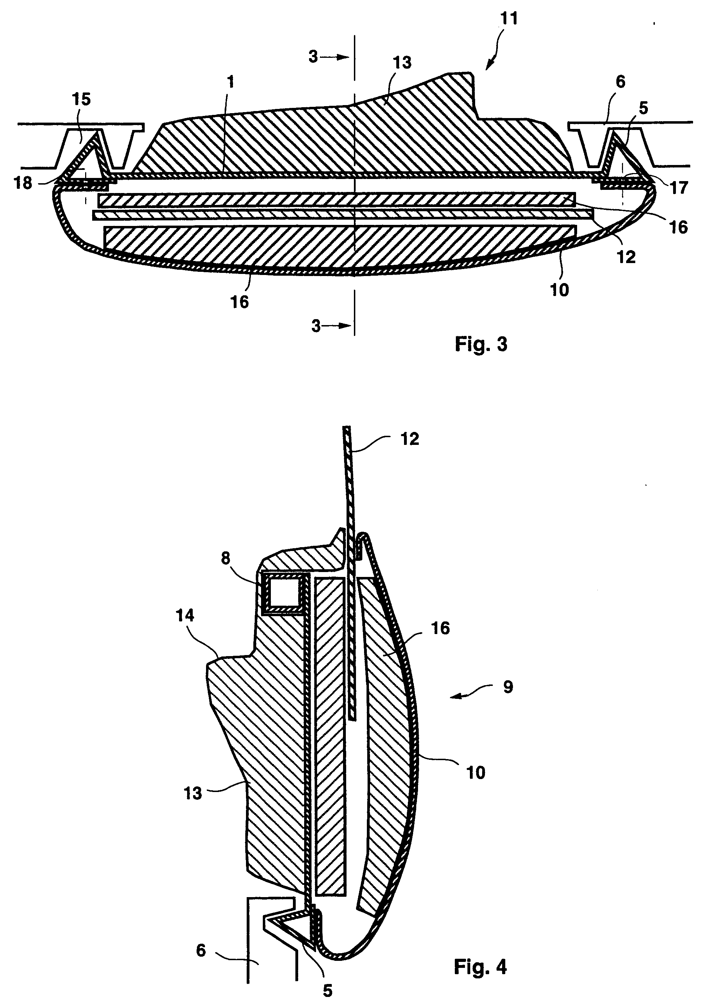

Une autre solution pour fixer le panneau anti-intrusion au panneau extérieur 10 consiste à les visser ou les riveter l'un à l'autre, comme représenté à la Fig. 3. Pour cela le panneau anti-intrusion selon l'invention est muni d'orifices 17 débouchants à l'intérieur de la cavité ménagée par le jonc périphérique 5.

La portière selon l'invention comporte au moins un moyen d'absorption 16 disposé dans la partie pleine, entre le panneau extérieur 10 et le panneau intérieur 11.

Le moyen d'absorption 16 peut être par exemple une plaque de mousse fixée ou collée à l'intérieur de la partie pleine de la portière.

Dans l'exemple de réalisation représenté aux Fig. 2 à 4, la portière comporte deux plaques 16, une première entre le panneau extérieur 10 et la vitre 12, lorsque celle-ci est en position descendue, et une seconde entre le panneau anti-intrusion et ladite vitre.

Ce moyen d'absorption 16 a pour but de transmettre directement et le plus rapidement possible l'énergie due à un choc latéral contre la portière du panneau extérieur 10 au panneau anti-intrusion.

Lorsque la portière est en position fermée sur le cadre de portière, celle-ci est en connexion mécanique avec son cadre, le jonc 5 coopérant avec la gorge 15 ménagée dans l'encadrement de la portière.

Ainsi la plaque en acier 1 peut être considérée comme étant ancrée sur toute sa périphérie du fait de l'encastrement du jonc 5 dans la gorge 15 de l'encadrement 6 et de la présence de la traverse rigide 8.

Lors d'un choc latéral contre la portière, du fait de l'ancrage de la plaque 1, celle-ci va se déformer, non pas en flexion comme c'est le cas des solutions des techniques antérieures, mais en allongement multiaxial, ce qui permet d'absorber une quantité d'énergie bien plus grande et de répartir les efforts dus au choc de la portière sur l'encadrement de manière plus homogène que les dispositifs de l'état de la technique et ainsi de transmettre une quantité d'énergie plus faible à l'habitacle et aux occupants du véhicule.

L'avantage du panneau anti-intrusion selon l'invention réside essentiellement dans sa capacité à s'adapter à tout type de portière à liaison dite encastrée, sans nécessiter de modification de leur encadrement, ni même du panneau extérieur.

## Revendications

1. Panneau anti-intrusion de portière de véhicule automobile constituée d'au moins une partie inférieure pleine (9) formée d'un panneau extérieur (10) et d'un panneau de revêtement intérieur (11) et destinée à coopérer avec un encadrement de portière (6), caractérisé en ce qu'il est constitué d'une plaque en acier (1) aux dimensions de la partie inférieure pleine (9) de la portière, présentant le long de ses extrémités latérales (2, 3) et de son extrémité inférieure (4) un jonc périphérique (5), ayant une forme géométrique non développable en cas de sollicitation mécanique en déformation, faisant saillie, destiné à coopérer avec l'encadrement de la portière (6), et une traverse rigide (8) le long du bord supérieur (7) de ladite plaque (1), et.en ce que le jonc périphérique (5) et la plaque en acier (1) sont monobloc

2. Panneau anti-intrusion selon la revendication 1, caractérisé en ce que le jonc périphérique (5) a la forme générale d'un triangle, la base étant solidaire de la plaque en acier.

3. Panneau anti-intrusion selon la revendication 1, caractérisé en ce que le jonc périphérique (5) a la forme générale d'un trapèze, la grande base étant solidaire de la plaque en acier.

4. Panneau anti-intrusion selon la revendication 1, caractérisé en ce que la plaque en acier (1) est plane.

5. Panneau anti-intrusion selon la revendication 1, caractérisé en ce que la plaque en acier (1) est légèrement convexe, le bombé étant dirigé du côté du jonc périphérique (5) et de la traverse (8).

6. Panneau anti-intrusion selon la revendication 1, caractérisé en ce que la traverse (8) est soudée sur la plaque en acier (1).

7. Panneau anti-intrusion selon la revendication 1, caractérisé en ce que la traverse (8) est vissée sur la plaque en acier (1).

8. Panneau anti-intrusion selon l'une des revendications 1 à 7, caractérisé en ce qu'il est muni sur toute sa périphérie d'orifices (17) destinés à le fixer dans la portière, entre le panneau de revêtement intérieur (11) et le panneau extérieur (10).

9. Panneau anti-intrusion selon la revendication 8, caractérisé en ce que les orifices (17) sont débouchants à l'intérieur de la cavité (18) ménagée par le jonc périphérique (5).

10. Panneau anti-intrusion selon l'une des revendications 1 à 9, caractérisé en ce qu'il est réalisé en acier possédant un allongement minimal égal à 30 %.

11. Portière de véhicule automobile comportant au moins une partie inférieure pleine (9), constituée d'un panneau extérieur (10) et d'un panneau intérieur (11), caractérisée en ce que le panneau intérieur (11) est un panneau anti-intrusion selon l'une quelconque des revendications 1 à 10 sur lequel est fixé un revêtement moulé formant l'intérieur de ladite portière.

12. Portière de véhicule automobile selon la revendication 11, caractérisée en ce qu'elle est en liaison encastrée avec son encadrement (6) lorsqu'elle est en position fermée, le jonc périphérique (5) coopérant avec une saillie (15) ménagée dans ledit encadrement (6).
